# EUROPEAN PATENT APPLICATION

(11) **EP 4 671 009 A1**
(43) Date of publication of application: **31.12.2025**
(21) Application number: 25184925.3
(22) Date of filing: 24.06.2025
(51) Int. Cl.: B60H 1/00, B60H 3/06

(54) **WORKING VEHICLE**

(30) Priority: 25.06.2024 JP 2024102438
(71) Applicant: Kubota Corporation, Osaka-shi, Osaka 556-8601 (JP)
(72) Inventor: YASUNOBE, Daisuke, Sakai-shi (JP)
(74) Representative: Schlegel, Sebastian

(57) **Abstract**

Included are: a roof constituting a ceiling portion of a cabin and including an internal space capable of accommodating equipment inside; and a filter unit disposed in the internal space so as to be located on a rear side of the roof and including a filter device capable of removing an object to be removed included in introduced outside air, included are: a blower configured to introduce outside air into the filter device; a second guide member (first duct) through which the outside air having passed through the filter device flows; and an air conditioning unit disposed in the internal space so as to be located on a front side of the roof and configured to feed the outside air having flown through the second guide member into the cabin, and the blower and the second guide member are disposed in the internal space between the air conditioning unit and the filter unit in a front-rear direction.

## Description

The disclosure relates to a technique of a working vehicle.

### Background

Conventionally, a technique of a working vehicle including a roof is known. For example, JP 2024-43997 A discloses such a technique.

The working vehicle described in JP 2024-43997 A includes support columns, an upper frame, a roof, an outside air filter, and the like. The upper frame couples upper end portions of the support columns. The roof is formed in a hollow shape and is provided on the upper frame. Furthermore, outside air introduction ports are formed at end portions on the left and right outer sides of the roof. The outside air filter is provided at each of the outside air introduction ports. Outside air is introduced into an internal space of the roof through the outside air introduction port and purified by the outside air filter.

In the roof of JP 2024-43997 A, it is necessary to secure a space for providing the outside air filter and the outside air introduction port at each of the end portions on the left and right outer sides, so that the roof overhangs relatively largely to the left and right outer sides with respect to the upper frame. For this reason, for example, when the working vehicle travels in a narrow work space such as a space between trees, there is a possibility that a portion overhanging to the left and right of the roof comes into contact with surrounding obstacles (trees and the like), and there is room for improvement.

### Summary

One aspect of the present disclosure has been made in view of the above circumstances, and an object of the present disclosure is to provide a working vehicle capable of reducing overhang of a roof in a left-right direction.

The problem to be solved by one aspect of the present disclosure is as described above, and a solution to the problem will be described below.

The problem is solved by the working vehicle according to the independent claim 1. Embodiments are the subject matter of dependent claims in the appended set of claims.

An aspect of the present disclosure includes: a roof constituting a ceiling portion of a cabin and including an internal space capable of accommodating equipment inside; and a filter unit disposed in the internal space so as to be located on a rear side of the roof and including a first filter device capable of removing an object to be removed included in introduced outside air.

According to one aspect of the present disclosure, it is possible to reduce overhang of the roof in the left-right direction.

An aspect of the present disclosure includes: a first blower configured to introduce outside air into the first filter device; a first duct through which the outside air having passed through the first filter device flows; and an air conditioning unit disposed in the internal space so as to be located on a front side of the roof and configured to feed the outside air having flown through the first duct into the cabin, and the first blower and the first duct are disposed in the internal space between the air conditioning unit and the filter unit in a front-rear direction.

According to one aspect of the present disclosure, the air conditioning unit, the filter unit, the first blower, and the first duct can be disposed side by side in the front-rear direction, and a thickness of the roof can be reduced.

An aspect of the present disclosure includes a second duct through which outside air fed from the air conditioning unit into the cabin flows, and the second duct is disposed so as to extend rearward from the air conditioning unit along a side portion of the roof.

According to one aspect of the present disclosure, a blow port of an air conditioner can be disposed at a position close to a face of a passenger in the cabin.

An aspect of the present disclosure includes a second filter device capable of removing an object to be removed included in introduced outside air and different from the first filter device, the filter unit includes a switching portion capable of switching between a first state in which outside air is introduced into the first filter device and a second state in which outside air is introduced into the second filter device, and the first filter device, the second filter device, and the switching portion are disposed in parallel along a left-right direction in plan view on a rear side of the roof.

According to one aspect of the present disclosure, by disposing the first filter device, the second filter device, and the switching portion in parallel along the left-right direction in plan view, a thickness of the roof can be reduced.

In one aspect of the present disclosure, the cabin includes left and right pillars configured to support a rear side of the roof, a first pillar of one of the left and right pillars is provided with a first intake port that takes in outside air introduced into the first filter device, and a second pillar of the other of the left and right pillars is provided with a second intake port that takes in outside air introduced into the second filter device.

According to one aspect of the present disclosure, since the intake ports are disposed not on side surfaces of the roof but on the left and right pillars, it is possible to reduce overhang of the roof in the left-right direction.

In an aspect of the present disclosure, at least one of the first filter device and the second filter device is disposed above the pillar so as to overlap the pillar in plan view.

According to one aspect of the present disclosure, by disposing at least one of the first filter device and the second filter device at a position relatively close to the intake port of the pillar, it is possible to reduce a pressure loss when the outside air is introduced into the filter device.

In one aspect of the present disclosure, the filter unit includes a second blower disposed adjacent to the first filter device and configured to introduce outside air into the first filter device.

According to one aspect of the present disclosure, it is possible to reduce a pressure loss when the outside air flows between the first filter device and the second blower.

In one aspect of the present disclosure, the filter unit includes a flow meter capable of measuring a flow rate of outside air that has passed through the first filter device.

According to one aspect of the present disclosure, it is possible to measure a flow rate of outside air fed from the first filter device into the cabin.

According to one aspect of the present disclosure, it is possible to reduce overhang of the roof in the left-right direction.

### Brief description of drawings

- Fig. 1: is a left side view illustrating an overall configuration of a tractor according to one aspect of the present disclosure;
- Fig. 2: is a front perspective view illustrating a cabin;
- Fig. 3: is a front exploded perspective view of the same;
- Fig. 4: is a plan view illustrating a cabin frame;
- Fig. 5: is a left side view illustrating the periphery of a left rear pillar;
- Fig. 6: is a cross-sectional view taken along line A1-A1 in Fig. 5;
- Fig. 7: is a right side view illustrating the periphery of a right rear pillar;
- Fig. 8: is a front exploded perspective view illustrating a roof;
- Fig. 9: is a plan view illustrating an inner roof;
- Fig. 10: is a cross-sectional view of the roof taken along line A2 illustrated in Fig. 9;
- Fig. 11: is a cross-sectional view taken along line A3-A3 in Fig. 9;
- Fig. 12: is a cross-sectional view of a first guide member taken along line A4 illustrated in Fig. 11;
- Fig. 13: is a plan view illustrating a state in which a filter device is attached and detached;
- Fig. 14: is a plan view schematically illustrating a flow route of outside air in the inner roof;
- Fig. 15: is a plan cross-sectional view schematically illustrating a first switching portion;
- Fig. 16: is a plan cross-sectional view schematically illustrating a second switching portion;
- Fig. 17A: is a schematic view illustrating a state in which outside air introduced from the left rear pillar flows;
- Fig. 17B: is a schematic view illustrating a state in which outside air introduced from the right rear pillar flows; and
- Fig. 18: is a plan view illustrating a first seal member and a second seal member.

### Description of embodiments

In the following description, directions indicated by arrows U, D, F, B, L, and R in the drawings are defined as an upward direction, a downward direction, a forward direction, a backward direction, a left direction, and a right direction, respectively.

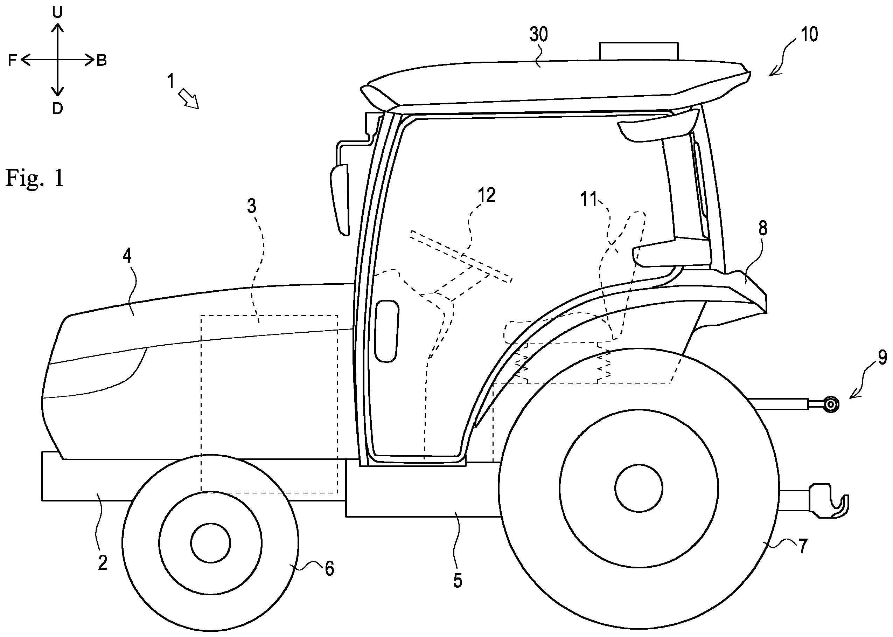

First, an overall configuration of a tractor 1 as a working vehicle according to an aspect of the present disclosure will be described. The tractor 1 illustrated in Fig. 1 mainly includes a machine body frame 2, an engine 3, a bonnet 4, a transmission case 5, front wheels 6, rear wheels 7, a fender 8, a lifting device 9, a cabin 10, and the like.

The machine body frame 2 is a frame-shaped member formed by appropriately combining a plurality of panel members. The machine body frame 2 is disposed in a front portion of the tractor 1 with its longitudinal direction oriented in a front-rear direction. The engine 3 is fixed to a rear portion of the machine body frame 2. The engine 3 is covered with the bonnet 4. The transmission case 5 is fixed to a rear portion of the engine 3. The transmission case 5 accommodates a transmission device (not illustrated) that shifts power from the engine 3.

A front portion of the machine body frame 2 is supported by a pair of the left and right front wheels 6 through a front axle mechanism (not illustrated). A rear portion of the transmission case 5 is supported by a pair of the left and right rear wheels 7 through a rear axle mechanism (not illustrated). A pair of the left and right rear wheels 7 is covered with the fender 8 from substantially above.

The lifting device 9 is provided at the rear portion of the transmission case 5. Various working devices (for example, a cultivator or the like) can be mounted on the lifting device 9. The lifting device 9 can lift and lower the mounted working device by an actuator such as a hydraulic cylinder.

Power of the engine 3 can be transmitted to the front axle mechanism and can be transmitted to the front wheels 6 via the front axle mechanism after being shifted by the transmission device (not illustrated) accommodated in the transmission case 5. Furthermore, the power shifted by the transmission device can be transmitted to the rear wheels 7 via the rear axle mechanism. In this way, the front wheels 6 and the rear wheels 7 are rotationally driven by the power of the engine 3, and the tractor 1 can travel. Furthermore, the working device mounted on the lifting device 9 can be driven by the power of the engine 3.

The cabin 10 is provided behind the engine 3. The cabin 10 is placed on a vehicle body (such as the transmission case 5). An indoor space in which a passenger gets is formed inside the cabin 10. A seat 11 on which a passenger sits is disposed in the indoor space. Furthermore, a steering wheel 12 for adjusting a turning angle of the front wheels 6 is disposed in the front portion of the cabin 10.

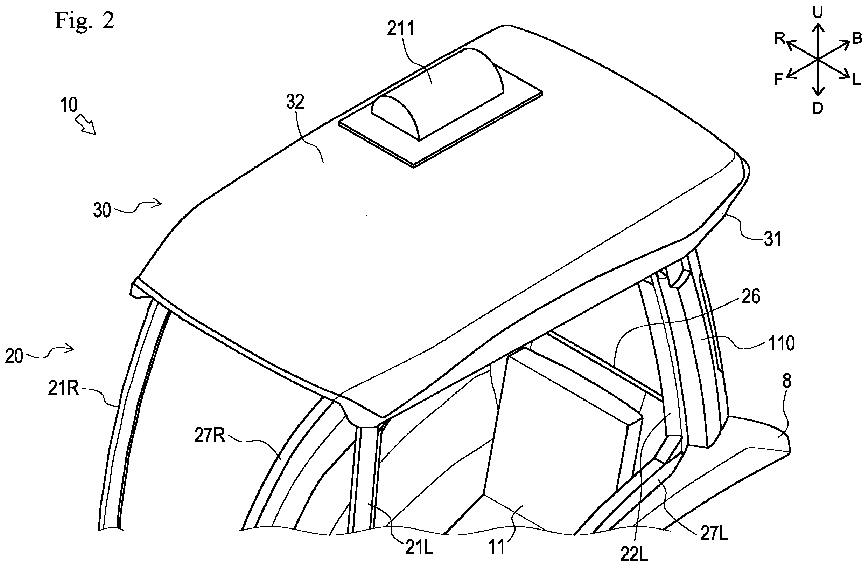

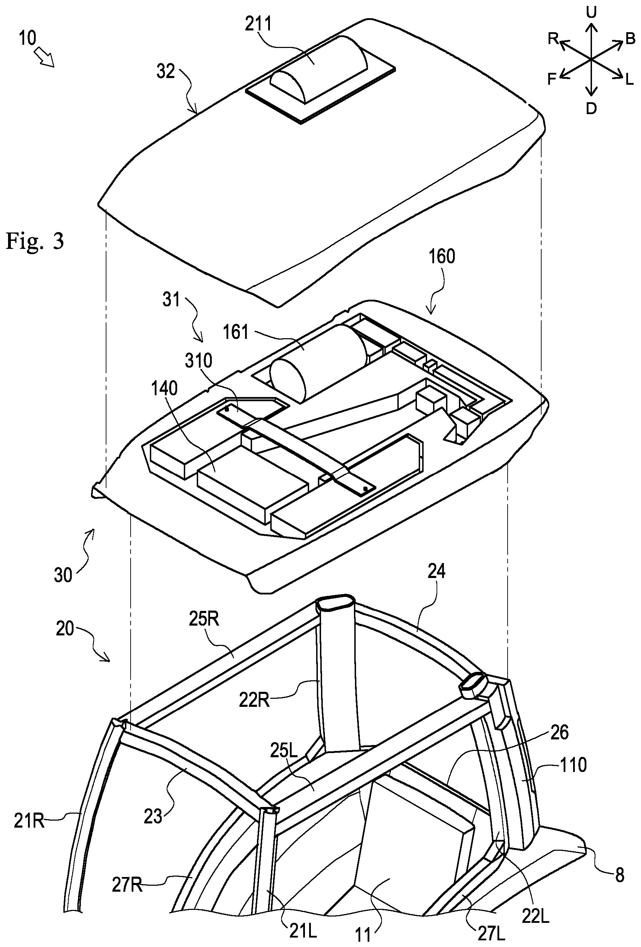

Next, a configuration of the cabin 10 will be described. As illustrated in Figs. 2 and 3, the cabin 10 mainly includes a cabin frame 20, a roof 30, and the like.

The cabin frame 20 constitutes a framework of the cabin 10. The cabin frame 20 is formed by combining a longitudinal frame member, a plate-shaped member, and the like. Specifically, as illustrated in Fig. 3, the cabin frame 20 mainly includes a left front pillar 21L, a right front pillar 21R, a left rear pillar 22L, a right rear pillar 22R, a front beam 23, a rear beam 24, a left side beam 25L, a right side beam 25R, a rear lower frame 26, a left side lower frame 27L, a right side lower frame 27R, and the like.

The left front pillar 21L, the right front pillar 21R, the left rear pillar 22L, and the right rear pillar 22R are disposed such that the longitudinal directions thereof are substantially vertical directions. The left front pillar 21L and the right front pillar 21R are disposed in the front portion of the cabin 10 so as to be spaced apart from each other in the left-right direction. The left front pillar 21L and the right front pillar 21R support the front side of the roof 30 described later. The left rear pillar 22L and the right rear pillar 22R are disposed in a rear portion of the cabin 10 at intervals in the left-right direction. The left rear pillar 22L and the right rear pillar 22R support the rear side of the roof 30.

As described above, the cabin frame 20 of the present embodiment is a four-pillar cabin frame 20 having no center pillar between the front pillars 21L and 21R and the rear pillars 22L and 22R. Note that the configuration of the cabin frame 20 is not limited to the present embodiment, and can be arbitrarily changed. For example, the cabin frame 20 may include a six-pillar cabin frame 20 in which center pillars are disposed between the front pillars 21L and 21R and the rear pillars 22L and 22R.

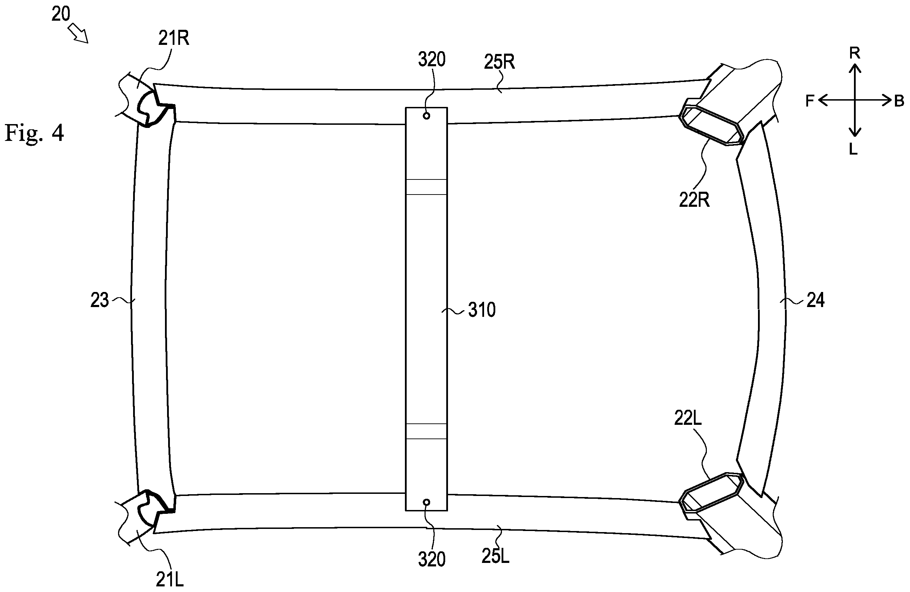

The front beam 23, the rear beam 24, the left side beam 25L, and the right side beam 25R illustrated in Figs. 3 and 4 constitute an upper portion of the cabin frame 20. The front beam 23 and the like are disposed with the longitudinal direction thereof oriented in the substantially horizontal direction. The front beam 23 is disposed so as to couple the upper end portions of the left front pillar 21L and the right front pillar 21R. The rear beam 24 is disposed so as to couple the upper end portions of the left rear pillar 22L and the right rear pillar 22R. The left side beam 25L is disposed so as to couple the upper end portions of the left front pillar 21L and the left rear pillar 22L. The right side beam 25R is disposed so as to couple the upper end portions of the right front pillar 21R and the right rear pillar 22R. In this manner, the front beam 23, the rear beam 24, the left side beam 25L, and the right side beam 25R are formed in a rectangular frame shape in plan view.

Furthermore, in the present embodiment, the left side beam 25L and the right side beam 25R are coupled to each other by a reinforcement member 310. This improves the rigidity of the upper portion of the cabin frame 20. Note that the reinforcement member 310 will be described later.

The rear lower frame 26 illustrated in Fig. 3 is disposed so as to couple the lower end portions of the left rear pillar 22L and the right rear pillar 22R. The left side lower frame 27L is disposed so as to extend forward and downward from the left rear pillar 22L. The right side lower frame 27R is disposed so as to extend forward and downward from the right rear pillar 22R. The left side lower frame 27L and the right side lower frame 27R are formed in a curved shape in a side view so as to bulge forward and upward, and the fender 8 is fixed to the lower portions of the left side lower frame 27L and the right side lower frame 27R, respectively.

The roof 30 constitutes a ceiling portion of the cabin 10. The roof 30 is provided on the upper portion of the cabin frame 20 and is disposed so as to cover the seat 11 from above. The roof 30 mainly includes an inner roof 31 and an outer roof 32.

The inner roof 31 is fixed to an upper portion of the cabin frame 20 and constitutes a ceiling in the cabin 10. An air conditioning unit 140 and the like described later are disposed inside the inner roof 31. The outer roof 32 is disposed on the upper side of the inner roof 31 and is fixed to the upper portion of the inner roof 31. The outer roof 32 is formed so as to cover the inner roof 31 from above. The roof 30 is formed in a substantially hollow box shape by the outer roof 32 and the inner roof 31.

In the cabin 10 according to the present embodiment, outside air can be introduced into the roof 30 through the left rear pillar 22L and the right rear pillar 22R. The air conditioning unit 140 in the roof 30 performs air conditioning of the air in the roof 30. The air conditioned by the air conditioning unit 140 is blown into the room. Hereinafter, structures related to the flow of air as described above will be sequentially described.

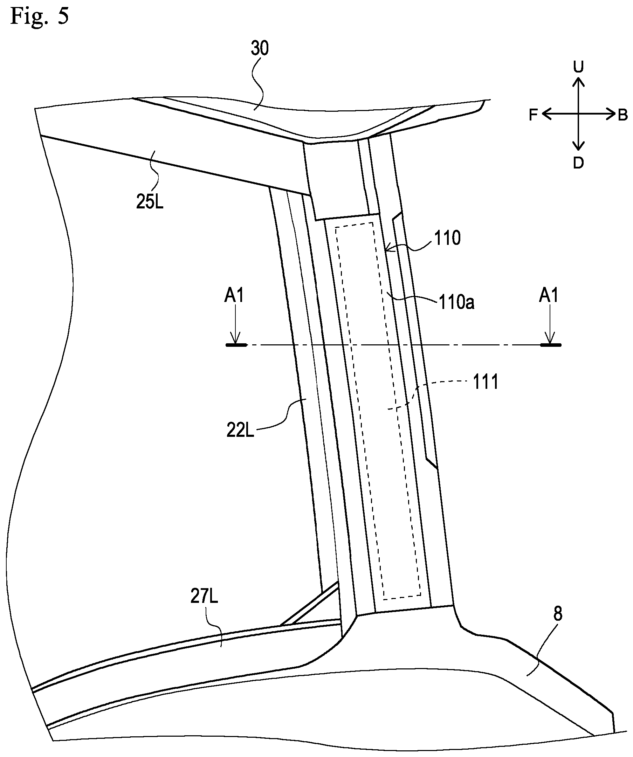

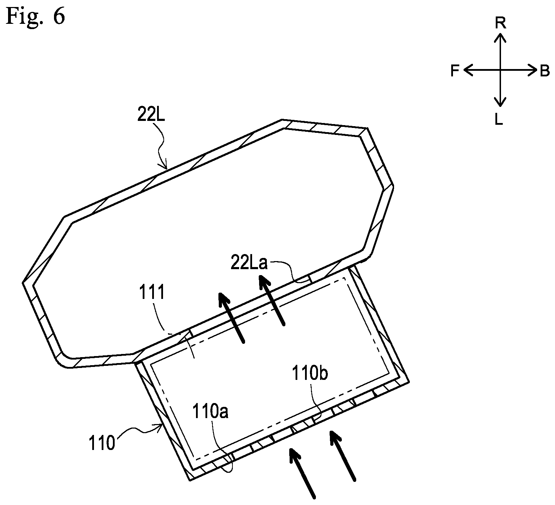

First, the structure of the left rear pillar 22L and its periphery (the filter accommodation member 110 and the like) illustrated in Figs. 5 and 6 will be described.

The left rear pillar 22L is formed in a longitudinal shape extending vertically. Furthermore, the left rear pillar 22L is formed in a curved shape slightly expanding outward in the left-right direction. The left rear pillar 22L is formed in a hollow shape having a substantially rectangular cross section (see Fig. 6). An opening 22La that allows the inside and the outside of the left rear pillar 22L to communicate with each other is formed on a side surface of the left rear pillar 22L facing substantially the left direction.

The opening 22La is for taking in outside air introduced into the filter device 111 described later. The opening 22La is formed in, for example, a rectangular shape in side view, and at least one opening is formed on the left side surface of the left rear pillar 22L. Note that the configuration of the opening 22La (number, shape, etc.) is not particularly limited, and can be appropriately changed. The left rear pillar 22L can introduce outside air from the opening 22La. The outside air introduced into the left rear pillar 22L can flow upward through the left rear pillar 22L and flow into the roof 30 from the upper end portion of the left rear pillar 22L.

The filter accommodation member 110 and the filter device 111 are provided in the left rear pillar 22L. The filter accommodation member 110 is for accommodating the filter device 111. The filter accommodation member 110 is formed in a substantially rectangular parallelepiped shape that is long vertically. The filter accommodation member 110 is formed along the left rear pillar 22L (in a curved shape slightly bulging outward in the left-right direction). The right side surface of the filter accommodation member 110 is opened. The left side surface (introduction surface 110a) of the filter accommodation member 110 is formed in a mesh shape in which a large number of minute openings 110b are formed. Note that, in Fig. 5, illustration of the opening 110b is omitted.

The filter device 111 removes an object to be removed (dust or dirt) included in the outside air. The filter device 111 is formed in a substantially rectangular parallelepiped shape that is long vertically. Furthermore, the filter device 111 is formed so that the outside air can pass left and right. The filter device 111 includes a filter that allows outside air to flow and collects an object to be removed. The filter device 111 is accommodated in the filter accommodation member 110.

The filter accommodation member 110 is fixed to the left rear pillar 22L in a state of accommodating the filter device 111. At this time, the opening 22La formed on the left side surface of the left rear pillar 22L is disposed so as to be covered by the filter accommodation member 110. Thus, the filter device 111 is disposed on the left rear side of the cabin 10 (on the left rear pillar 22L side out of the left and right sides of the roof 30 in plan view), and can remove dust and dirt contained in the outside air introduced into the left rear pillar 22L.

Hereinafter, a state in which outside air is introduced from the left rear pillar 22L will be described. When air is sucked by a blower 130 disposed in the roof 30 to be described later, the outside air passes through an introduction surface 110a of the filter accommodation member 110, is removed by the filter device 111 accommodated in the filter accommodation member 110, and then is introduced into the left rear pillar 22L through an opening 22La of the left rear pillar 22L. The outside air flows upward in the left rear pillar 22L and is guided to the roof 30.

Next, the structure of the right rear pillar 22R will be described.

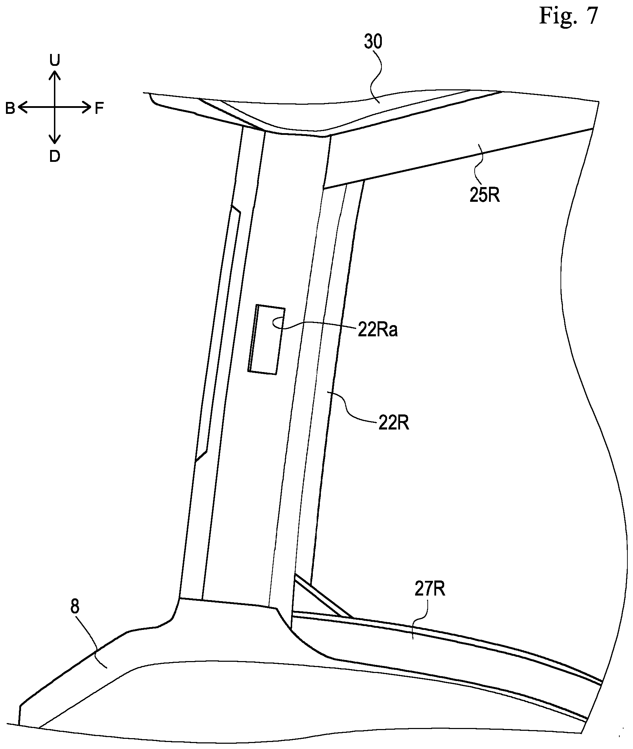

The right rear pillar 22R illustrated in Fig. 7 is formed symmetrically with the left rear pillar 22L. An opening 22Ra is formed in the right rear pillar 22R. The opening 22Ra is for taking in outside air introduced into the filter device 161 described later.

Note that, unlike the left rear pillar 22L, the filter accommodation member 110 and the filter device 111 (see Fig. 6) are not provided around the right rear pillar 22R, and dust and the like included in the outside air introduced into the right rear pillar 22R are removed in the roof 30 (a filter unit 160 to be described later).

Next, a structure of the roof 30 will be described.

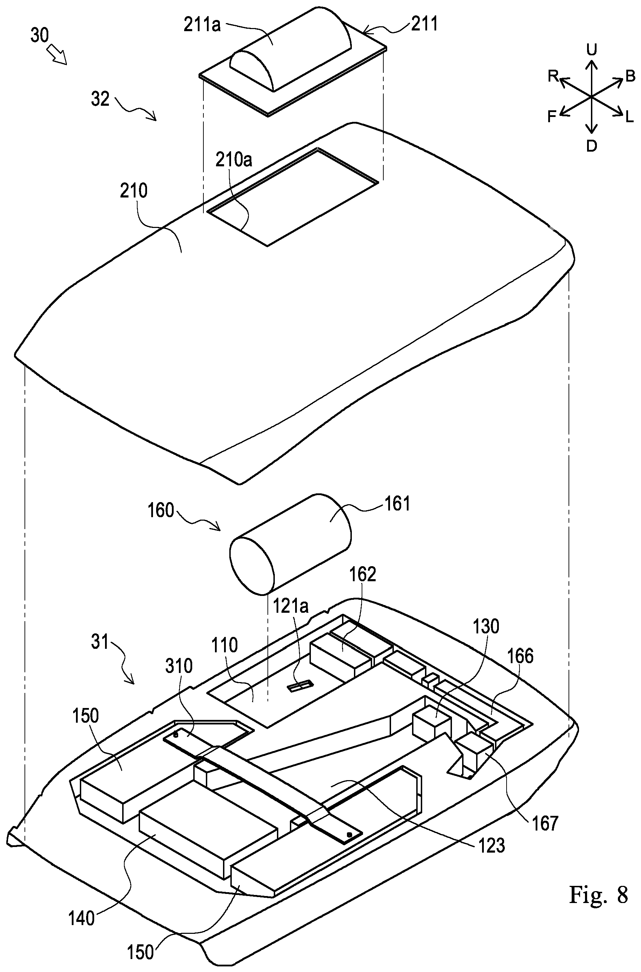

As described above, the roof 30 is formed in a hollow shape by the inner roof 31 and the outer roof 32. As illustrated in Fig. 8, the roof 30 (inner roof 31) accommodates devices such as an air conditioning unit 140. First, the configuration of the inner roof 31 will be described.

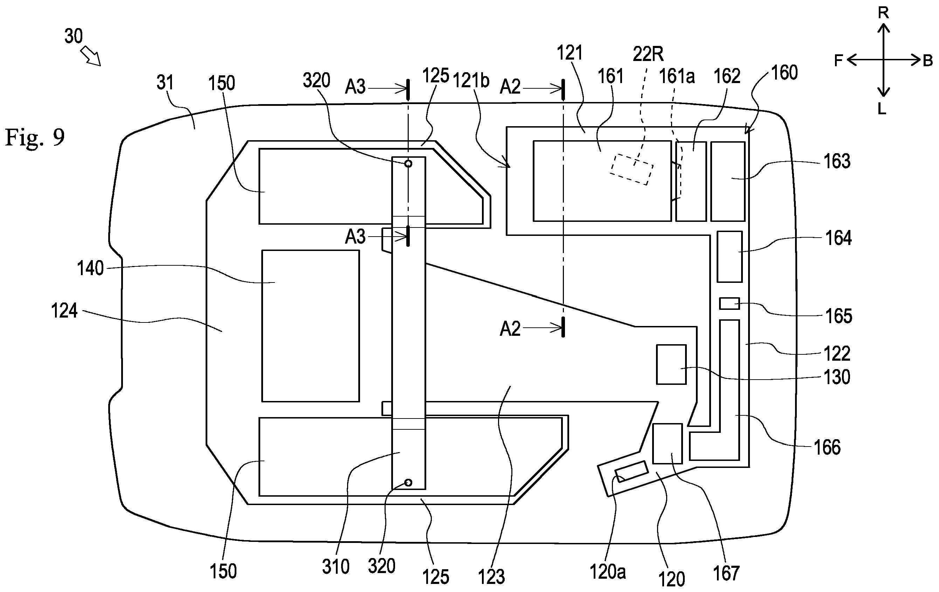

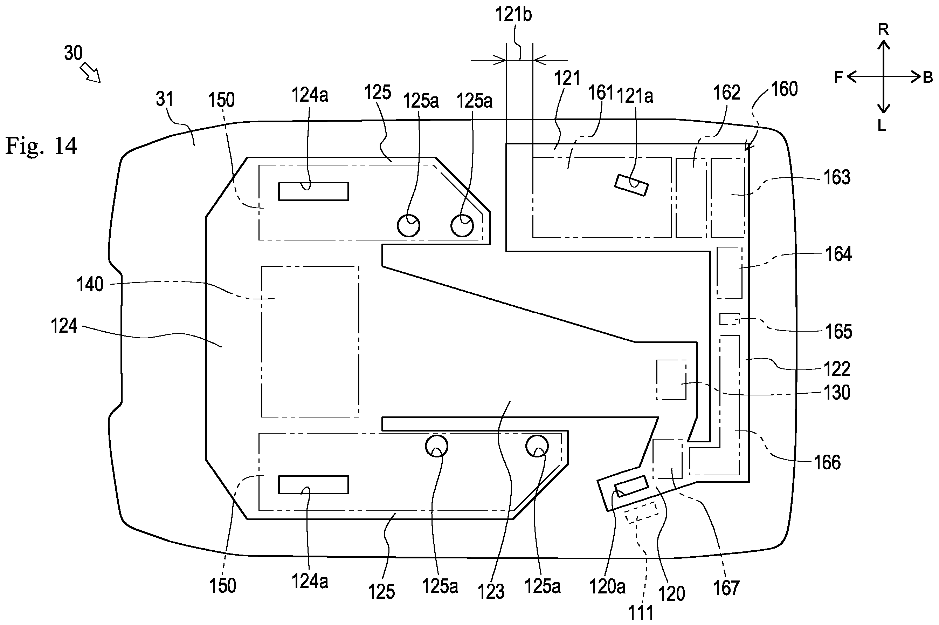

As illustrated in Figs. 8 and 9, the inner roof 31 is formed in a substantially rectangular shape in plan view having substantially the same size as the frame formed by the front beam 23, the rear beam 24, and the like. A plurality of recesses is formed on the upper surface of the inner roof 31. The inner roof 31 is covered with the outer roof 32. By being partitioned by an inner wall of the inner roof 31 and an inner wall of the outer roof 32, an internal space of the roof 30 is formed. Fig. 14 schematically illustrates a shape of a recess or the like of the inner roof 30 for explaining an internal space of the roof 31. As illustrated in Fig. 14, an introduction portion 120, a filter accommodation portion 121, a connection portion 122, a first guide portion 123, an air conditioner accommodation portion 124, and a second guide portion 125 are formed in the internal space of the roof 30.

The introduction portion 120 is a portion into which the outside air purified by the filter device 111 is introduced. The introduction portion 120 is formed at a rear portion of the roof 30. More specifically, the introduction portion 120 is formed on the rear side of the front-rear center of the roof 30 in the front-rear direction. Furthermore, the introduction portion 120 is formed so as to extend left and right from the vicinity of the left end portion of the roof 30 to the vicinity of the left and right center. A blower 130 to be described later is accommodated in a right end portion of the introduction portion 120. The left end portion of the introduction portion 120 overlaps the left rear pillar 22L (see Fig. 3) in plan view. An outside air introduction port 120a is formed at the left end portion of the introduction portion 120 so as to vertically penetrate the inner roof 31. The outside air introduction port 120a is connected to the upper end of the left rear pillar 22L. As a result, the outside air guided by the left rear pillar 22L is introduced into the introduction portion 120 through the outside air introduction port 120a.

The filter accommodation portion 121 accommodates a filter device 161 to be described later, and outside air is introduced into the filter device 161. The filter accommodation portion 121 is formed in a right rear portion of the roof 30. More specifically, the filter accommodation portion 121 is formed on the rear side of the front-rear center of the roof 30 in the front-rear direction. Furthermore, the filter accommodation portion 121 is formed on the right side of the left-right center of the roof 30 in the left-right direction. The filter accommodation portion 121 overlaps the right rear pillar 22R (see Fig. 3) in plan view. An outside air introduction port 121a is formed in the filter accommodation portion 121 so as to vertically penetrate the inner roof 31. The outside air introduction port 121a is connected to the upper end of the right rear pillar 22R. As a result, the outside air guided by the right rear pillar 22R is introduced into the filter accommodation portion 121 through the outside air introduction port 121a.

The connection portion 122 is a portion that connects the introduction portion 120 and the filter accommodation portion 121 to each other. The connection portion 122 is formed at a rear end portion of the roof 30. The connection portion 122 is formed to extend in the left-right direction. A right end portion of the connection portion 122 is connected to the filter accommodation portion 121. Furthermore, a left end portion of the connection portion 122 is connected to a left-right middle portion of the introduction portion 120.

The first guide portion 123 is formed so as to extend back and forth in a substantially central portion on the left and right of the roof 30. An upper side of the first guide portion 123 is covered with a cover. As a result, the first guide portion 123 can guide outside air in the front-rear direction. A rear end portion of the first guide portion 123 is connected to a right end portion of the introduction portion 120. A front end portion of the first guide portion 123 is connected to an air conditioner accommodation portion 124 described later. The first guide portion 123 is formed such that the left and right width gradually increases from the rear to the front.

The air conditioner accommodation portion 124 is formed in a front portion of the roof 30. More specifically, the air conditioner accommodation portion 124 is formed on the front side of the front-rear center of the roof 30 in the front-rear direction. Furthermore, the air conditioner accommodation portion 124 is formed to extend from the vicinity of the left end portion to the vicinity of the right end portion of the roof 30. A front end portion of the first guide portion 123 is connected to a central portion in the left-right direction of a rear end of the air conditioner accommodation portion 124. A blow port 124a is formed in the air conditioner accommodation portion 124 so as to vertically penetrate the inner roof 31.

The blow port 124a is formed at each of the left and right end portions of the air conditioner accommodation portion 124. The blow port 124a is formed to be open to the indoor space of the cabin 10. As a result, conditioned air from the air conditioning unit 140 described later is thus blown into the cabin 10 through the blow port 124a.

The second guide portions 125 are respectively formed on the left and right sides of the first guide portion 123. The second guide portions 125 are respectively connected to left and right end portions of the air conditioner accommodation portion 124. Each of the second guide portions 125 is formed so as to extend rearward from the air conditioner accommodation portion 124. A blow port 125a is formed in the second guide portion 125 so as to vertically penetrate the inner roof 31.

Two blow ports 125a are formed in each of the left and right second guide portions 125. Each of the blow ports 125a is formed to be open to the indoor space of the cabin 10. As a result, conditioned air from the air conditioning unit 140 described later is thus blown into the cabin 10 through the blow port 125a.

As illustrated in Fig. 3, the inner roof 31 is fixed to the cabin frame 20 from above. More specifically, the inner roof 31 is fixed to the front beam 23 or the like by a fastener such as a bolt in a state of being placed on the front beam 23, the rear beam 24, the left side beam 25L, and the right side beam 25R.

As described above, in the present embodiment, the front beam 23 and the like are not vertically sandwiched between the inner roof 31 and the outer roof 32, but the bottom surface of the inner roof 31 (roof 30) is placed on the front beam 23 and the like. As a result, since the front beam 23 and the like are disposed outside the roof 30, a free space of the internal space of the roof 30 can be increased. Furthermore, due to the increase in the free space, a space for accommodating devices such as the air conditioning unit 140 can be secured without enlarging the size of the roof 30.

Next, members accommodated in the roof 30 will be described. As illustrated in Figs. 9 and 14, the roof 30 accommodates the blower 130, the air conditioning unit 140, a first guide member 150, and the filter unit 160.

The blower 130 is a device for sending outside air to the air conditioning unit 140. The blower 130 is accommodated in a right end portion of the introduction portion 120 (in the vicinity of a connection portion with the first guide portion 123). The blower 130 is connected to a rear end portion of the first guide portion 123. The blower 130 can send the outside air introduced into the introduction portion 120 toward the first guide portion 123.

The air conditioning unit 140 is a device for performing air conditioning. The air conditioning unit 140 is accommodated in the air conditioner accommodation portion 124 (on a front side of the roof 30). An air introduction port (not illustrated) of the air conditioning unit 140 is connected to the front end portion of the first guide portion 123.

The first guide member 150 guides air conditioned by the air conditioning unit 140 (air to be fed into the cabin 10). The first guide member 150 is formed in a tubular shape extending back and forth. A pair of the left and right first guide members 150 is provided across the air conditioning unit 140. Each of the first guide members 150 is accommodated in the roof 30 so as to extend from the left and right end portions of the air conditioner accommodation portion 124 to the second guide portion 125.

Front end portions of the first guide members 150 are connected to air discharge ports (not illustrated) formed on left and right side surfaces of the air conditioning unit 140, respectively. Thus, the first guide member 150 is disposed so as to extend rearward along the side portion of the roof 30 from a connection portion with the air conditioning unit 140. A front portion of the first guide member 150 is connected to the blow port 124a formed in the air conditioner accommodation portion 124. Furthermore, a rear portion of the first guide member 150 is connected to the blow port 125a formed in the second guide portion 125.

The filter unit 160 removes an object to be removed included in the outside air and guides the object to be removed to the introduction portion 120. The filter unit 160 includes a filter device 161, an attachment member 162, a blower 163, a first switching portion 164, a flow meter 165, and a second guide member 166.

The filter device 161 illustrated in Figs. 8 and 9 removes an object to be removed included in the outside air. The filter device 161 is formed in a substantially cylindrical shape. Inside the filter device 161, a filter that allows the flow of outside air and collects an object to be removed is provided (not illustrated). The filter has higher removal performance for a dust removal target than the filter device 111 (see Fig. 6) provided in the left rear pillar 22L. In the present embodiment, the filter of the filter device 161 can remove more types of substances than the filter device 111. For example, the filter can remove vapor, aerosol, and the like in addition to dust and dirt (an object to be removed of the filter device 111).

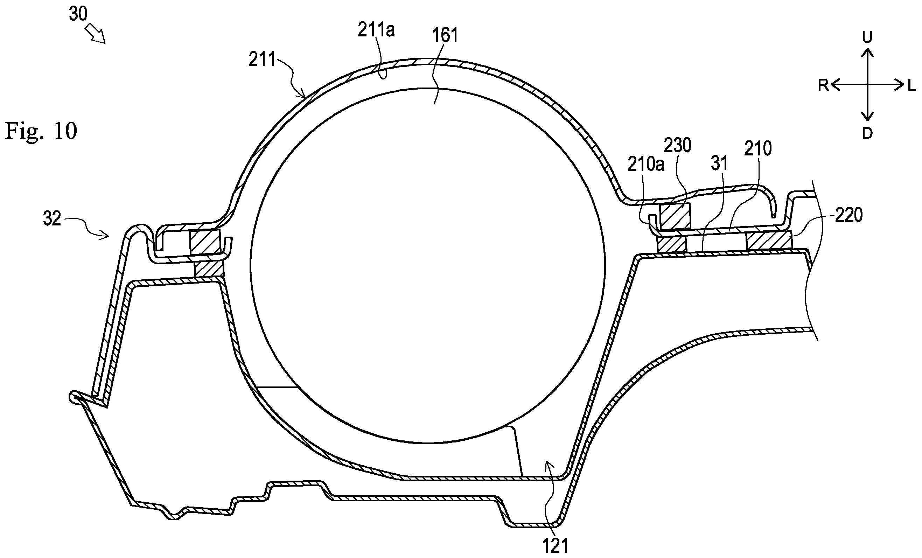

The filter device 161 is accommodated in the filter accommodation portion 121 with its axis oriented in the front-rear direction. Note that, as illustrated in Fig. 10, a bottom portion (right rear portion of the inner roof 31) of the filter accommodation portion 121 is formed to bulge downward according to the shape of the filter device 161. More specifically, the bottom portion of the filter accommodation portion 121 is formed in a concave shape capable of accommodating a substantially lower half of the filter device 161. The filter device 161 is disposed in the bulging portion and is disposed above the right rear pillar 22R. The filter device 161 communicates with the right rear pillar 22R through the outside air introduction port 121a (see Fig. 14) of the filter accommodation portion 121.

Furthermore, as illustrated in Fig. 8, the filter device 161 is disposed on a right side of the roof 30 (a side of the right rear pillar 22R out of both the left and right sides), and overlaps the right rear pillar 22R in plan view. As a result, a distance from the right rear pillar 22R to the filter device 161 can be made relatively short, so that a pressure loss when the outside air is introduced from the right rear pillar 22R to the filter device 161 can be reduced.

Furthermore, a front-rear width of the filter device 161 is smaller than a front-rear width of the filter accommodation portion 121. Therefore, as illustrated in Figs. 9 and 14, a gap 121b is formed in the filter accommodation portion 121 in which the filter device 161 is movable along the front-rear direction in a state where the filter device 161 is accommodated.

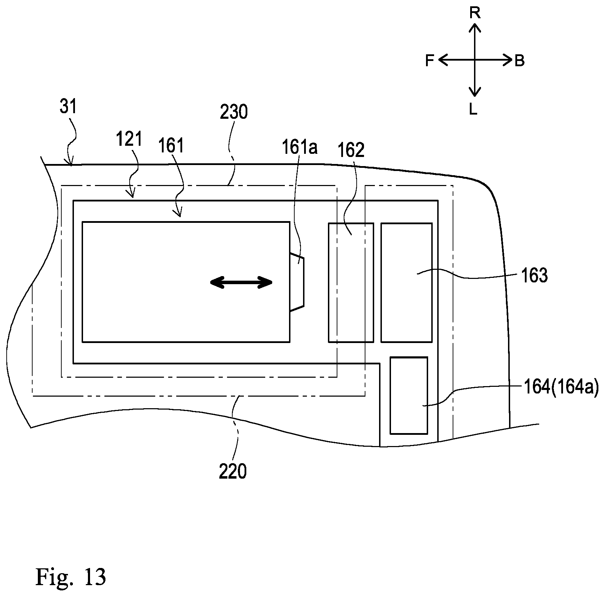

Fig. 13 illustrates the filter device 161 that has moved forward from the state illustrated in Fig. 9. As illustrated in Fig. 13, a protrusion 161a protruding rearward is formed in the filter device 161. The protrusion 161a is formed in a tubular shape. The filter device 161 can discharge the outside air from which dust and the like have been removed from a tip portion of the protrusion 161a.

The attachment member 162 illustrated in Figs. 9 and 14 is a member to which the filter device 161 is detachably attached. The attachment member 162 is formed so as to be engageable with the protrusion 161a of the filter device 161. The attachment member 162 is accommodated in the filter accommodation portion 121.

Note that Fig. 9 illustrates the filter device 161 in which the protrusion 161a is engaged with the attachment member 162 (attached to the attachment member 162). When the filter device 161 is moved forward, the engagement with the attachment member 162 is released (see Fig. 13).

As described above, in the present embodiment, the filter device 161 is moved in the front-rear direction, whereby the filter device 161 is attached to and detached from the attachment member 162. Furthermore, as described above, the gap 121b in which the filter device 161 is movable along the front-rear direction (allowing the movement in the front-rear direction) is formed in the filter accommodation portion 121. According to the configuration, the filter device 161 can be attached and detached using the gap 121b.

The blower 163 illustrated in Figs. 9 and 14 is a device for introducing outside air into the filter device 161. The blower 163 is connected to the filter device 161 through the attachment member 162. The blower 163 can send the outside air purified by the filter device 161 leftward. The blower 163 is accommodated in the right end portion of the connection portion 122 and is disposed on the right side of the roof 30 (on a side of the right rear pillar 22R out of both the left and right sides). Furthermore, the filter device 161 is disposed in the filter accommodation portion 121 adjacent to the right end portion of the connection portion 122. By thus disposing the filter device 161 and the blower 163 adjacent to each other around the right rear pillar 22R, it is possible to reduce a pressure loss when the outside air flows from the opening 22Ra of the right rear pillar 22R to the blower 163.

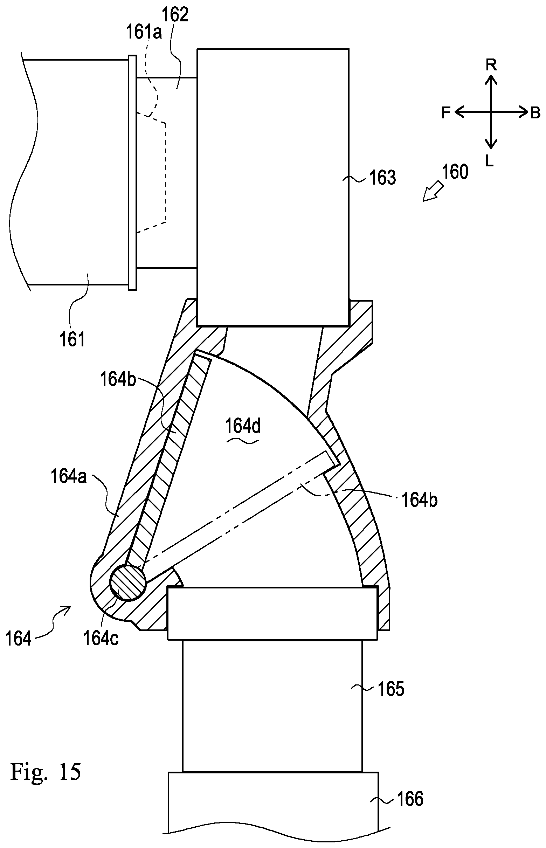

The first switching portion 164 is for switching whether or not the outside air purified by the filter device 161 can be circulated. The first switching portion 164 is accommodated in the connection portion 122 and is disposed on the left side (downstream side in a flowing direction of the outside air) of the blower 163. Furthermore, the first switching portion 164 is connected to the blower 163. Hereinafter, an example of the configuration of the first switching portion 164 will be described with reference to Fig. 15. Note that Fig. 15 is a plan cross-sectional view illustrating the first switching portion 164 and its periphery, and shapes of various members are schematically illustrated for convenience of description.

The first switching portion 164 includes a case 164a, an opening and closing member 164b, and a rotational shaft 164c. The case 164a is formed in a hollow shape. In the case 164a, a flow route 164d through which outside air can pass right and left is formed. The opening and closing member 164b opens and closes the flow route 164d. The opening and closing member 164b is formed in a flat plate shape and is accommodated in the case 164a. The rotational shaft 164c is disposed with its axis oriented in the vertical direction. The rotational shaft 164c rotatably supports the opening and closing member 164b.

The first switching portion 164 can rotate the opening and closing member 164b about an axis of the rotational shaft 164c by a drive source such as a motor. As a result, the first switching portion 164 can switch between a state in which the flow route 164d is opened and the outside air can circulate (a state of the opening and closing member 164b indicated by a solid line in Fig. 15) and a state in which the flow route 164d is closed and the outside air cannot circulate (a state of the opening and closing member 164b indicated by a two-dot chain line in Fig. 15).

Note that the configuration of the first switching portion 164 illustrated in Fig. 15 is an example, and can be changed as appropriate. For example, the first switching portion 164 can open and close the flow route 164d by sliding the opening and closing member 164b in the vertical direction or the horizontal direction instead of rotating the opening and closing member.

The flow meter 165 illustrated in Figs. 9 and 14 measures a flow rate of the outside air that has passed through the filter device 161. The flow meter 165 is formed so that air can pass in the left-right direction. The flow meter 165 is accommodated in the connection portion 122 and is disposed on the left side (downstream side in the flowing direction of the outside air) of the first switching portion 164. Furthermore, the flow meter 165 is connected to the first switching portion 164.

The second guide member 166 guides the outside air that has passed through the flow meter 165. The second guide member 166 is formed in a tubular shape with its axis oriented in the left-right direction. The second guide member 166 is accommodated in the connection portion 122 and is disposed on the left side of the flow meter 165. The second guide member 166 is connected to the flow meter 165 and the second switching portion 167.

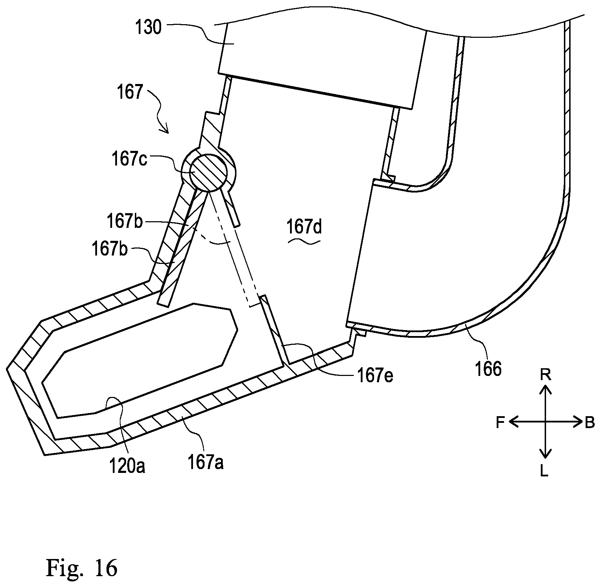

The second switching portion 167 switches whether or not the outside air having passed through the filter device 111 can be circulated. The second switching portion 167 is accommodated in the introduction portion 120. Hereinafter, an example of the configuration of the second switching portion 167 will be described with reference to Fig. 16. Note that Fig. 16 is a plan cross-sectional view illustrating the second switching portion 167 and its periphery, and shapes of various members are schematically illustrated for convenience of description.

The second switching portion 167 includes a case 167a, an opening and closing member 167b, and a rotational shaft 167c. The case 167a is formed in a hollow shape. In the case 167a, a flow route 167d through which outside air can circulate is formed. A left end portion of the flow route 167d communicates with the outside air introduction port 120a of the introduction portion 120. Furthermore, a middle portion between the left and right of the flow route 167d communicates with the second guide member 166. Furthermore, a right end portion of the flow route 167d is connected to the blower 130.

The opening and closing member 167b opens and closes the flow route 167d. More specifically, the opening and closing member 167b is a member that opens and closes a portion of the flow route 167d communicating with the second guide member 166 and the outside air introduction port 120a. The opening and closing member 167b is formed in a substantially plate shape. The opening and closing member 167b is disposed in the case 167a. The rotational shaft 167c is disposed with its axis oriented in the vertical direction. The rotational shaft 167c rotatably supports the opening and closing member 167b.

The second switching portion 167 can rotate the opening and closing member 167b about an axis of the rotational shaft 167c by a drive source such as a motor. As a result, the second switching portion 167 can switch between a state in which the flow route 167d is opened and the outside air can circulate (a state of the opening and closing member 167b indicated by a solid line in Fig. 16) and a state in which the flow route 167d is closed and the outside air cannot circulate (a state of the opening and closing member 167b indicated by a two-dot chain line in Fig. 16).

Note that the configuration of the second switching portion 167 illustrated in Fig. 16 is an example, and can be changed as appropriate. For example, the second switching portion 167 can open and close the flow route 167d by sliding the opening and closing member 167b in the vertical direction or the horizontal direction instead of rotating the opening and closing member.

As illustrated in Fig. 14, in the present embodiment, various members (the filter device 161 and the like) constituting the filter unit 160 are disposed on the rear side of the roof 30. More specifically, as described above, the filter device 161 and the attachment member 162 are accommodated in the filter accommodation portion 121 formed on the rear side of the roof 30, and other members (the blower 163 and the like) are accommodated in the connection portion 122 formed on the rear end portion of the roof 30. By disposing the filter unit 160 on the rear side of the roof 30 in this manner, it is possible to suppress the roof 30 from overhanging to the left and right. Therefore, for example, when the tractor 1 travels in a narrow work space such as between trees, it is possible to suppress contact with surrounding obstacles (trees and the like).

Next, a flow route of outside air in the roof 30 configured as described above will be described.

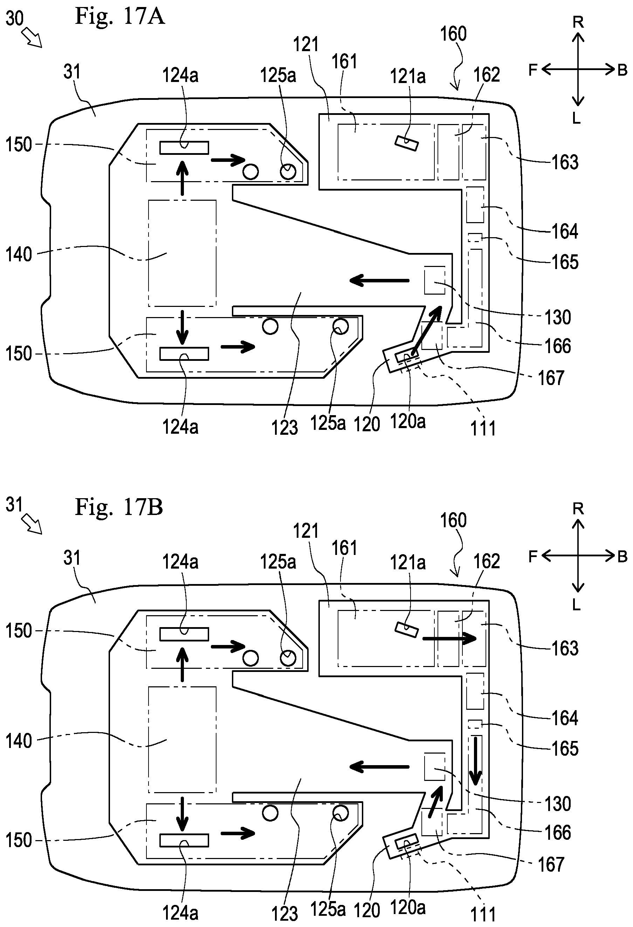

Note that the roof 30 of the present embodiment can switch between a state (state of Fig. 17A) in which the outside air from the outside air introduction port 120a of the introduction portion 120 is circulated and a state (state of Fig. 17B) in which the outside air from the outside air introduction port 121a of the filter accommodation portion 121 is circulated. For this reason, hereinafter, first, a flow route of outside air in a case where the outside air from the outside air introduction port 120a of the introduction portion 120 is circulated will be described.

In a case where the outside air from the outside air introduction port 120a of the introduction portion 120 is circulated, the first switching portion 164 is switched to a state in which the outside air cannot be circulated (see the opening and closing member 164b indicated by a two-dot chain line in Fig. 15). Furthermore, the second switching portion 167 is switched to a state in which the outside air can flow (see the opening and closing member 167b indicated by a solid line in Fig. 16). In this state, the blower 130 and the air conditioning unit 140 are operated. As a result, the outside air passes through the filter device 111 and is introduced into the introduction portion 120 through the opening 22La (see Fig. 6) of the left rear pillar 22L and the outside air introduction port 120a. As illustrated in Fig. 17A, the outside air flows rightward through the introduction portion 120 and then flows forward through the first guide portion 123.

The outside air flowing through the first guide portion 123 is air-conditioned (temperature adjustment or the like) by the air conditioning unit 140. The outside air (conditioned air) conditioned by the air conditioning unit 140 flows through the first guide member 150 to the blow port 124a and the blow port 125a, and is fed into the cabin 10. As a result, air introduced into the left rear pillar 22L (air purified by the filter device 111) can be used to air-condition the interior of the cabin 10. Note that, in a case where the air introduced from the left rear pillar 22L is circulated in the roof 30, the blower 163 is stopped.

Furthermore, the first guide member 150 of the present embodiment extends rearward from the air conditioning unit 140 and is connected to the blow port 125a. The blow port 125a is disposed at a position closer to the seat 11 (see Fig. 1) in the front-rear direction than the blow port 124a on the front side. Therefore, by blowing the air-conditioned air from the blow port 125a, the air-conditioned air is applied from a position relatively close to the face or the nape of the neck of a passenger seated on the seat 11, and the comfort of the passenger can be improved. For example, in a case where the air conditioning unit 140 performs a cooling operation, it is possible to effectively feel cool by applying the air-conditioned air to the nape of the neck or the like of the passenger.

Next, a flow route of the outside air in a case where the outside air from the outside air introduction port 121a of the filter accommodation portion 121 is circulated will be described.

In a case where the outside air from the outside air introduction port 121a of the filter accommodation portion 121 is circulated, the first switching portion 164 is switched to a state in which the outside air can be circulated (see the opening and closing member 164b indicated by a solid line in Fig. 15). Furthermore, the second switching portion 167 is switched to a state in which the outside air cannot be circulated (see the opening and closing member 167b indicated by a two-dot chain line in Fig. 16). In this state, the blowers 130 and 163 and the air conditioning unit 140 are operated. As a result, the outside air is introduced into the filter device 161 illustrated in Fig. 17B through the opening 22Ra (see Fig. 7) of the right rear pillar 22R and the outside air introduction port 121a of the filter accommodation portion 121. After being purified by the filter device 161, the outside air passes through the attachment member 162, the blower 163, and the like, and is introduced into the introduction portion 120 through the second guide member 166. The flow rate of the outside air is measured by the flow meter 165. By measuring the flow rate of the outside air in this way, various controls can be performed using the measurement result. For example, the pressure (internal pressure) in the cabin 10 can be controlled.

Similarly to the case where the outside air from the outside air introduction port 120a of the introduction portion 120 is circulated (the case of Fig. 17A), the outside air introduced into the introduction portion 120 flows through the first guide portion 123, is air-conditioned by the air conditioning unit 140, and is blown out into the interior of the cabin 10 from the blow port 124a or the like. Accordingly, air conditioning in the cabin 10 can be performed using the air purified by the filter device 161.

As described above, since the filter device 161 has higher removal performance for an object to be removed than the filter device 111, it is possible to feed cleaner air to the interior of the cabin 10 by circulating outside air from the outside air introduction port 121a of the filter accommodation portion 121.

The filter of the filter device 161 is less likely to allow outside air to pass than the filter of the filter device 111. For example, the filter of the filter device 161 has a finer mesh than the filter of the filter device 111. Therefore, in the present embodiment, the blower 163 is also operated in addition to the blower 130 to secure a feed amount of outside air to the air conditioning unit 140.

Furthermore, in the present embodiment, various members are arranged in the horizontal direction in the internal space of the roof 30, so that an increase in the thickness of the roof 30 is suppressed.

For example, as illustrated in Figs. 9 and 14, the filter device 161, the attachment member 162, and the blower 163 are disposed in parallel along the front-rear direction. Furthermore, the first switching portion 164, the flow meter 165, the second guide member 166, and the second switching portion 167 are disposed in parallel along the left-right direction with respect to the filter device 161 and the like. As a result, the filter device 161, the blower 163, and the like are prevented from overlapping vertically, and the thickness of the roof 30 can be reduced. Note that, in the present embodiment, the filter device 111 is also disposed in parallel with the second switching portion 167 and the like along the left-right direction in plan view.

Furthermore, the air conditioning unit 140, the first guide portion 123, the blower 130, and the filter unit 160 are disposed in parallel along the front-rear direction. In the present embodiment, the air conditioning unit 140, the first guide portion 123, the blower 130, and the filter unit 160 are arranged in this order from the front. With this configuration, for example, it is possible to suppress the air conditioning unit 140 and the first guide portion 123 from overlapping vertically on the front side of the roof 30. With such a configuration, on a front side of the roof 30, a height (ceiling height) of a ceiling in the interior of the cabin 10 can be ensured and hence, a view of a passenger can be ensured. Furthermore, it is possible to suppress the blower 130 and the filter unit 160 from overlapping vertically on the rear side of the roof 30 and also to secure the ceiling height on the rear side of the roof 30.

Furthermore, the blower 130 is disposed on the left side of the blower 163 of the filter unit 160 (on a side of the left rear pillar 22L out of both the left and right sides of the roof 30). As a result, since the blower 130 can be disposed at a position relatively close to the left rear pillar 22L in plan view, it is possible to reduce a pressure loss when the outside air flows from the left rear pillar 22L to the blower 130.

Furthermore, in the present embodiment, air is introduced into the internal space of the roof 30 not through the left and right side surfaces of the roof 30 but through the left rear pillar 22L and the right rear pillar 22R. As a result, it is not necessary to install members (for example, filters and the like) necessary for introducing the outside air on both left and right sides of the roof 30, so that it is possible to suppress the roof 30 from overhanging to the left and right.

Next, a configuration of the outer roof 32 will be described.

The outer roof 32 illustrated in Figs. 8 and 10 includes a main body portion 210 and a cover portion 211. Note that Fig. 10 is a cross-sectional view of the roof 30 taken along line A2 illustrated in Fig. 9. The main body portion 210 is formed in a substantially quadrangular shape having substantially the same size as the inner roof 31 in plan view so as to cover the inner roof 31 from above. The main body portion 210 is fixed to the inner roof 31. In the present embodiment, the main body portion 210 is fixed to the inner roof 31 using a tool. An opening 210a is formed in the main body portion 210.

The opening 210a opens so as to communicate with the internal space of the roof 30 (more specifically, the filter accommodation portion 121). The opening 210a is formed in a right rear portion of the main body portion 210. The opening 210a is formed in a rectangular shape slightly larger than the filter device 161 in plan view. Therefore, the filter device 161 can vertically pass through the opening 210a.

According to the configuration of the opening 210a, even if the filter device 111 is enlarged, the filter device 161 can be installed on the roof 30 without difficulty. More specifically, as illustrated in Fig. 10, the filter device 161 can be caused to protrude upward from the main body portion 210 through the opening 210a, and interference between the outer roof 32 and the filter device 161 can be avoided. Furthermore, the ceiling height on the rear side of the roof 30 can be secured by causing the filter device 161 to protrude upward.

The cover portion 211 is a portion for opening and closing the opening 210a. The cover portion 211 is formed in a rectangular shape in plan view which is slightly larger than the opening 210a. The cover portion 211 includes a convex portion 211a that bulges upward. The convex portion 211a is formed at a middle portion between the left and right of the cover portion 211. The convex portion 211a bulges upward according to the shape of the filter device 161. More specifically, the convex portion 211a bulges upward to such an extent that a portion of the filter device 161 protruding upward from the main body portion 210 can be covered from above.

The cover portion 211 is detachably fixed to the main body portion 210 (around the opening 210a). In the present embodiment, the cover portion 211 is configured to be attachable to and detachable from the main body portion 210 without using a tool. For example, the cover portion 211 is attached to the main body portion 210 through a knob bolt or the like by manually turning the knob bolt. By attaching the cover portion 211 to the main body portion 210 in this manner, the opening 210a can be closed to protect the filter device 161.

Furthermore, when the cover portion 211 is removed from the main body portion 210, the opening 210a can be opened. As a result, since the filter device 161 is exposed to the outside of the roof 30 through the opening 210a, maintenance of the filter device 161 can be performed without removing the main body portion 210 from the inner roof 31, and workability can be improved.

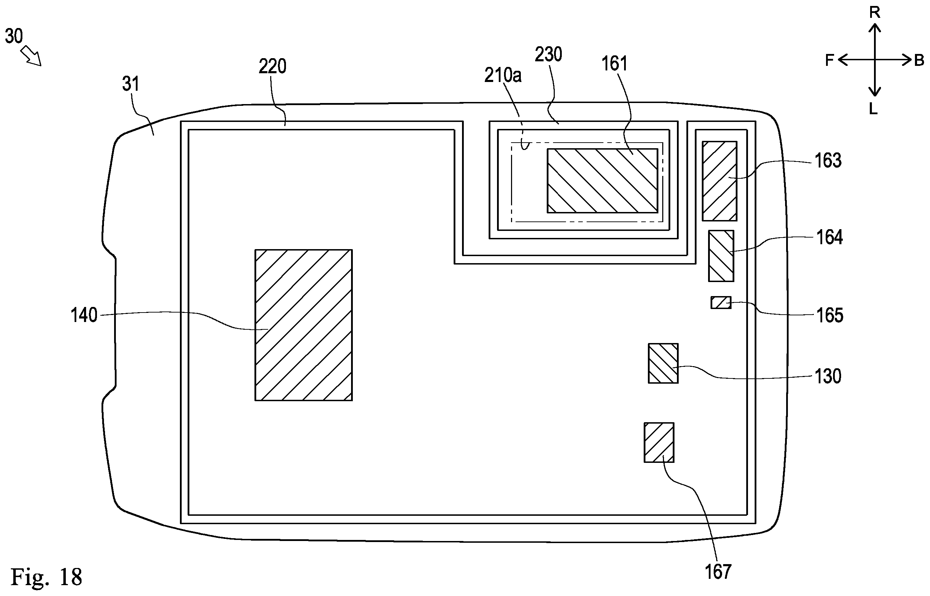

As illustrated in Figs. 10 and 18, a first seal member 220 is provided between the outer roof 32 and the inner roof 31 configured as described above. Note that, for the sake of explanation, Fig. 18 schematically illustrates the shape of equipment (the air conditioning unit 140 or the like) in the roof 30 and the shape of the roof 30. The first seal member 220 is for sealing between the outer roof 32 and the inner roof 31. The first seal member 220 includes an elastically deformable material (for example, rubber). The first seal member 220 is formed in a substantially rectangular annular shape in plan view along an outer edge of the outer roof 32. The air conditioning unit 140, the blower 130, and the like are disposed inside the first seal member 220 in plan view.

As illustrated in Figs. 13 and 18, the first seal member 220 is disposed so as to avoid the opening 210a of the main body portion 210 and the filter device 161. In the present embodiment, a right rear portion of the first seal member 220 is disposed so as to be recessed to the left and right inner sides in plan view, and the filter device 161 and the like are disposed in this recessed portion. Thus, the first seal member 220 is disposed such that the filter device 161 and the like are located outside the first seal member 220.

The first seal member 220 is sandwiched and elastically deformed between the inner roof 31 and the main body portion 210 in a state where the main body portion 210 of the outer roof 32 is fixed to the inner roof 31. With such a configuration, it is possible to suppress intrusion of water into a region (sealing region) surrounded by the first seal member 220 in plan view and hence, it is possible to suppress occurrence of a trouble in the air conditioning unit 140, the blower 130 and the like.

Furthermore, as described above, the first seal member 220 is provided so as to avoid the opening 210a and the filter device 161 (so that the filter device 161 and the like are disposed outside the seal region). When the filter device 161 is maintained, the cover portion 211 is removed from the main body portion 210 and the opening 210a is opened, but the first seal member 220 remains sandwiched between the inner roof 31 and the main body portion 210 even if the cover portion 211 is removed (see Fig. 10). Therefore, the maintenance of the filter device 161 can be suitably performed without impairing the sealing property.

Furthermore, in the present embodiment, a second seal member 230 is provided between the main body portion 210 and the cover portion 211. The second seal member 230 seals between the main body portion 210 and the cover portion 211. The second seal member 230 includes an elastically deformable material (for example, rubber). The second seal member 230 is formed in a substantially rectangular annular shape in plan view slightly larger than the opening 210a. The second seal member 230 is disposed around the opening 210a.

The second seal member 230 is sandwiched and elastically deformed between the main body portion 210 and the cover portion 211 in a state where the cover portion 211 is attached to the main body portion 210. As a result, the second seal member 230 can seal between the main body portion 210 and the cover portion 211 to suppress water from entering the region (seal region) surrounded by the second seal member 230 in plan view. Therefore, it is possible to suppress occurrence of a trouble in the filter device 161.

Next, the reinforcement member 310 of the cabin frame 20 will be described.

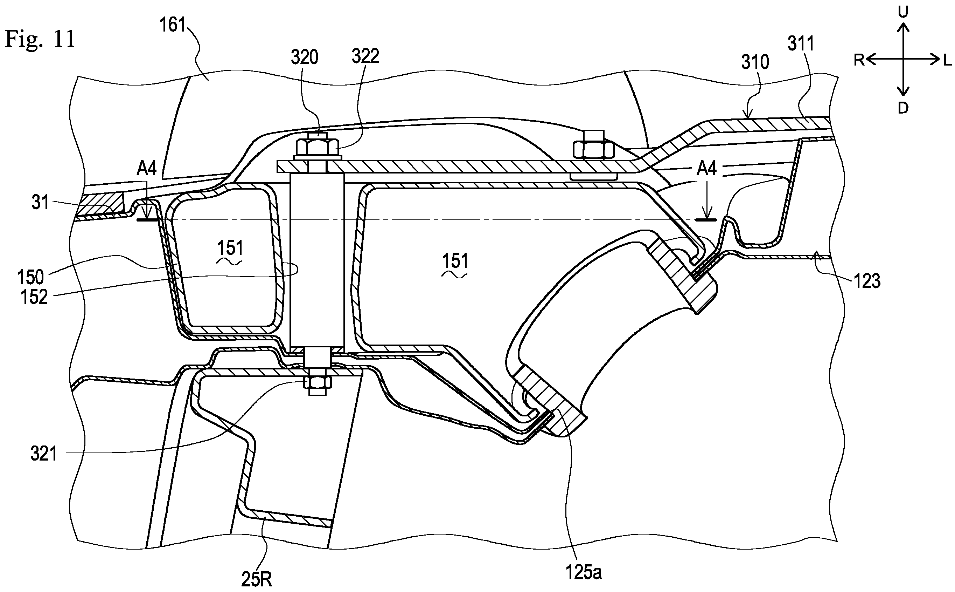

The reinforcement member 310 illustrated in Figs. 4 and 9 reinforces the cabin frame 20. The reinforcement member 310 is formed in a plate shape extending left and right. As illustrated in Fig. 11, the reinforcement member 310 includes a convex portion 311 that bulges upward. The convex portion 311 is formed at a middle portion between the left and right of the reinforcement member 310. A left and right width of the convex portion 311 is larger than a left and right width at the front end portion of the first guide portion 123.

Both left and right end portions of the reinforcement member 310 are fixed to the left side beam 25L and the right side beam 25R through a stud 320 and nuts 321 and 322. As a result, the reinforcement member 310 couples the left side beam 25L and the right side beam 25R to each other, and can suppress deformation of the left side beam 25L and the right side beam 25R.

Furthermore, as illustrated in Fig. 4, the reinforcement member 310 is disposed in a front-rear central portion of a frame body formed by the front beam 23, the rear beam 24, the left side beam 25L, and the right side beam 25R. For example, the reinforcement member 310 is disposed between the air conditioning unit 140 disposed on the front side of the roof 30 placed on the cabin frame 20 and the blower 130 disposed on the rear side in the front-rear direction (see Fig. 9). As a result, it is possible to effectively suppress the left side beam 25L and the right side beam 25R from being deformed to the left and right and to effectively enhance the rigidity of the cabin frame 20.

Hereinafter, a structure for fixing the reinforcement member 310 will be described by taking a right end portion of the reinforcement member 310 as an example.

As illustrated in Fig. 11, the stud 320 is formed in a stepped cylindrical shape in which an outer diameter of a vertically middle portion is larger than outer diameters of the both end portions in the vertical direction. A lower end portion of the stud 320 is inserted through the inner roof 31 and the right side beam 25R. The lower end portion of the stud 320 is screwed into the nut 321 fixed to the right side beam 25R, whereby the stud 320 is fixed to the right side beam 25R. Furthermore, the inner roof 31 is fixed to the right side beam 25R at a lower portion of the stud 320.

Furthermore, the stud 320 is disposed so as to protrude upward from the first guide member 150. By fixing the right end portion of the reinforcement member 310 to the upper end portion of the stud 320 through the nut 322, the reinforcement member 310 is fixed to the right side beam 25R in the internal space of the roof 30. Furthermore, in the present embodiment, the inner roof 31 is fixed to the right side beam 25R at the lower portion of the stud 320, and the reinforcement member 310 is fixed to an upper portion of the stud 320. With this configuration, the reinforcement member 310, the right side beam 25R, and the inner roof 31 can be fixed to each other through the stud 320.

In this manner, the reinforcement member 310 is fixed using the stud 320 protruding from the member (first guide member 150) provided in the internal space of the roof 30. According to this configuration, the reinforcement member 310 can be provided (after retrofitting) after the roof 30 is placed on the front beam 23 or the like.

Furthermore, since the reinforcement member 310 is disposed in the internal space of the roof 30 (see Fig. 8), the shape of the inner roof 31 can be simplified. More specifically, as described above, the bottom surface of the inner roof 31 (roof 30) is placed on the front beam 23 and the like. Therefore, for example, unlike the present embodiment, in a case where the reinforcement member 310 is disposed on the lower side of the inner roof 31, it is necessary to devise the lower shape of the inner roof 31 so as to avoid interference with the reinforcement member 310. On the other hand, in a case where the reinforcement member 310 is disposed in the internal space of the roof 30, it is not necessary to devise the lower shape of the inner roof 31, so that the shape of the inner roof 31 can be simplified.

Furthermore, as illustrated in Fig. 8, the reinforcement member 310 is disposed so as to straddle the front end portion of the first guide portion 123. Since the reinforcement member 310 is formed with the convex portion 311 bulging upward as described above, the convex portion 311 can suppress interference with the first guide portion 123.

As described above, the first guide member 150 guides the air-conditioned air from the air conditioning unit 140, but the stud 320 is provided so as to avoid a flow path 151 of the air-conditioned air.

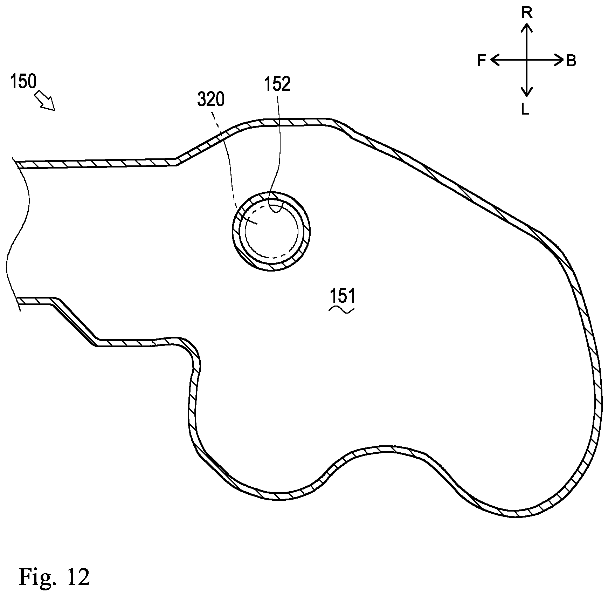

More specifically, as illustrated in Figs. 11 and 12, the first guide member 150 includes the flow path 151 and a hole forming portion 152. Note that Fig. 12 is a cross-sectional view of the first guide member 150 taken along line A4 illustrated in Fig. 11.

The hole forming portion 152 is a portion that forms a hole partitioned from the flow path 151. The hole forming portion 152 is formed at a middle portion in the front-rear direction of the first guide member 150. The hole forming portion 152 is formed in a substantially annular shape in plan view having an inner diameter larger than the outer diameter of the stud 320 (vertically middle portion). The hole forming portion 152 is formed so as to vertically penetrate the first guide member 150. Furthermore, the hole forming portion 152 is formed to extend from the upper surface to the lower surface of the first guide member 150. Thus, the hole forming portion 152 is partitioned from the flow path 151.

The vertically middle portion of the stud 320 is inserted into the hole forming portion 152. According to this configuration, the stud 320 can be provided using a space partitioned from the flow path 151 in the first guide member 150. With such a configuration, it is possible to prevent the stud 320 from penetrating the flow path 151 and hence, it is possible to suppress leakage of air-conditioned air (air-conditioned air from the air conditioning unit 140) which circulates through the flow path 151 to the outside of the first guide member 150.

As described above, the tractor 1 (working vehicle) according to the present embodiment includes: the roof 30 constituting a ceiling portion of the cabin 10 and including an internal space capable of accommodating equipment inside; and the filter unit 160 disposed in the internal space so as to be located on a rear side of the roof 30 and including the filter device 161 (first filter device) capable of removing an object to be removed included in introduced outside air.

With this configuration, it is possible to reduce the overhang of the roof 30 in the left-right direction.

Furthermore, the tractor 1 includes: the blower 130 (first blower) configured to introduce outside air into the filter device 161; the first guide portion 123 (first duct) through which the outside air having passed through the filter device 161 flows; and the air conditioning unit 140 disposed in the internal space so as to be located on a front side of the roof 30 and configured to feed the outside air having flown through the first guide portion 123 into the cabin 10, and the blower 130 and the first guide portion 123 are disposed in the internal space between the air conditioning unit 140 and the filter unit 160 in the front-rear direction (see Fig. 9).

With this configuration, a thickness of the roof 30 can be reduced.

Furthermore, the tractor 1 includes the first guide member 150 (second duct) through which outside air fed from the air conditioning unit 140 into the cabin 10 flows, and the first guide member 150 is disposed so as to extend rearward from the air conditioning unit 140 along a side portion of the roof 30 (see Fig. 9).

With such a configuration, the blow port 125a of an air conditioner (air-conditioned air) can be disposed at a position close to a face of a passenger in the cabin 10.

Furthermore, the tractor 1 includes the filter device 111 (second filter device) capable of removing an object to be removed included in introduced outside air and different from the filter device 161, the filter unit 160 includes a switching portion (first switching portion 164 and second switching portion 167) capable of switching between a first state in which outside air is introduced into the filter device 161 and a second state in which outside air is introduced into the filter device 111, and the filter device 161, the filter device 111, and the switching portion are disposed in parallel in a left-right direction in plan view on a rear side of the roof 30 (see Fig. 14).

With this configuration, a thickness of the roof 30 can be reduced.

Furthermore, the cabin 10 includes left and right pillars (right rear pillar 22R and left rear pillar 22L) configured to support a rear side of the roof 30, the right rear pillar 22R (first pillar) of one of the left and right pillars is provided with the opening 22Ra (first intake port) that takes in outside air introduced into the filter device 161, and the left rear pillar 22L (second pillar) of the other of the left and right pillars is provided with the opening 22La (second intake port) that takes in outside air introduced into the filter device 111 (see Figs. 6 and 7).

With this configuration, it is possible to reduce the overhang of the roof 30 in the left-right direction.

Furthermore, at least one of the filter device 161 and the filter device 111 (the filter device 161 in the present embodiment) is disposed above the pillar (right rear pillar 22R) so as to overlap the pillar in plan view (see Fig. 9).

With this configuration, it is possible to reduce a pressure loss when the outside air is introduced into the filter device 161.

Furthermore, the filter unit 160 includes the blower 163 (second blower) disposed adjacent to the filter device 161 and configured to introduce outside air into the filter device 161.

With this configuration, it is possible to reduce a pressure loss when the outside air flows between the filter device 161 and the blower 163.

Furthermore, the filter unit 160 includes the flow meter 165 capable of measuring a flow rate of outside air that has passed through the filter device 161.

With this configuration, the flow rate of the outside air fed from the filter device 161 into the cabin 10 can be measured.

Note that the tractor 1 according to the present embodiment is an embodiment of the working vehicle.

Furthermore, the filter device 161 according to the present embodiment is an embodiment of the first filter device.

Furthermore, the blower 130 according to the present embodiment is an embodiment of the first blower.

Furthermore, the first guide portion 123 according to the present embodiment is an embodiment of the first duct.

Furthermore, the first guide member 150 according to the present embodiment is an embodiment of the second duct.

Furthermore, the filter device 111 according to the present embodiment is an embodiment of the second filter device.

Furthermore, the first switching portion 164 and the second switching portion 167 according to the present embodiment are an embodiment of the switching portion.

Furthermore, the right rear pillar 22R and the left rear pillar 22L according to the present embodiment are an embodiment of the left and right pillars.

Furthermore, the right rear pillar 22R according to the present embodiment is an embodiment of the first pillar.

Furthermore, the opening 22Ra according to the present embodiment is an embodiment of the first intake port.

Furthermore, the left rear pillar 22L according to the present embodiment is an embodiment of the second pillar.

Furthermore, the opening 22La according to the present embodiment is an embodiment of the second intake port.

Furthermore, the blower 163 according to the present embodiment is an embodiment of the second blower.

Furthermore, as described above, the tractor 1 (working vehicle) according to the present embodiment includes: the filter device 161 (first filter device) capable of removing an object to be removed contained in introduced outside air; the filter device 111 (second filter device) capable of removing an object to be removed contained in the introduced outside air, the filter device 111 being different from the filter device 161; the right rear pillar 22R (first pillar) configured to support one side in the left-right direction of the roof 30 of the cabin 10 and including the opening 22Ra (first intake port) that takes in the outside air introduced into the filter device 161; and the left rear pillar 22L (second pillar) configured to support the other side in the left-right direction of the roof 30 and including the opening 22La (second intake port) that takes in the outside air introduced into the filter device 111.

With this configuration, it is possible to reduce the overhang of the roof 30 in the left-right direction.

Furthermore, the filter device 161 is disposed on a side of the right rear pillar 22R out of both left and right sides of the roof 30 in plan view (see Fig. 9), and the filter device 111 is disposed on a side of the left rear pillar 22L out of both left and right sides of the roof 30 in plan view (see Fig. 6).

With this configuration, it is possible to reduce a pressure loss when the outside air is introduced into the filter devices 111 and 161.

Furthermore, the filter device 161 is formed to have higher removal performance than the filter device 111, and is disposed above the right rear pillar 22R so as to overlap the right rear pillar 22R in plan view (see Fig. 9).

With this configuration, it is possible to further reduce a pressure loss when outside air is introduced into the filter device 161.

Furthermore, the filter device 161 is formed to have higher removal performance than the filter device 111, and is accommodated in a filter accommodation portion 121 (internal space) formed inside the roof 30.

With this configuration, the filter device 161 having relatively high removal performance and a tendency to increase in size can be accommodated in the filter accommodation portion 121 suitable for accommodating large-sized equipment.

Furthermore, the filter device 111 is accommodated in the filter accommodation member 110 (accommodation portion) provided in the left rear pillar 22L (see Fig. 6).

With this configuration, the filter device 111 that can be formed in a relatively small size can be provided not in the internal space of the roof 30 but in the left rear pillar 22L. As a result, the internal space of the roof 30 can be used for accommodating other equipment.

Furthermore, the tractor 1 includes a switching portion (a first switching portion 164 and a second switching portion 167) capable of switching between a first state in which outside air is introduced into the filter device 161 and a second state in which outside air is introduced into the filter device 111, and the filter device 161, the filter device 111, and the switching portion are disposed in parallel along the left-right direction in plan view (see Fig. 14).

With this configuration, a thickness of the roof 30 can be reduced.

Furthermore, the tractor 1 includes the blower 163 (first blower) capable of introducing outside air into the filter device 161 and disposed on a side of the right rear pillar 22R out of both left and right sides of the roof 30.

With this configuration, it is possible to reduce a pressure loss when allowing the outside air to pass through the filter device 161 (when flowing from the opening 22Ra to the blower 163).

Furthermore, the tractor 1 includes the blower 130 (second blower) capable of introducing outside air into the filter device 111 and disposed closer to the left rear pillar 22L than the blower 163 in the left-right direction.

With such a configuration, it is possible to reduce a pressure loss when allowing the outside air to pass through the filter device 111.

Furthermore, the blower 130 is capable of introducing outside air into both the filter device 161 and the filter device 111.

With this configuration, the outside air can be introduced into the filter device 161 using both the blowers 130 and 162.

Note that the tractor 1 according to the present embodiment is an embodiment of the working vehicle.

Furthermore, the filter device 161 according to the present embodiment is an embodiment of the first filter device.

Furthermore, the filter device 111 according to the present embodiment is an embodiment of the second filter device.

Furthermore, the right rear pillar 22R according to the present embodiment is an embodiment of the first pillar.

Furthermore, the opening 22Ra according to the present embodiment is an embodiment of the first intake port.

Furthermore, the left rear pillar 22L according to the present embodiment is an embodiment of the second pillar.

Furthermore, the opening 22La according to the present embodiment is an embodiment of the second intake port.

Furthermore, the blower 163 according to the present embodiment is an embodiment of the second blower.

Furthermore, the first switching portion 164 and the second switching portion 167 according to the present embodiment are an embodiment of the switching portion.

Furthermore, the blower 163 according to the present embodiment is an embodiment of the first blower.

Furthermore, the blower 130 according to the present embodiment is an embodiment of the second blower.

Furthermore, as described above, the tractor 1 (working vehicle) according to the present embodiment includes the cabin frame 20 constituting a framework of the cabin 10, and the roof 30 including an internal space capable of accommodating equipment inside and including a bottom surface placed on a frame-shaped upper frame (the front beam 23, rear beam 24, left side beam 25L, and right side beam 25R) constituting an upper portion of the cabin frame 20.

With this configuration, it is possible to increase the internal space (free space) of the roof 30 while suppressing the expansion of the size of the roof 30 toward the upper side.

Furthermore, the upper frame (the front beam 23 and the like) is formed by a plurality of beam portions (the front beam 23, rear beam 24, left side beam 25L, and right side beam 25R) extending in the horizontal direction, and includes the reinforcement member 310 (reinforcement portion) that is disposed in the internal space and couples the plurality of beam portions (see Figs. 4 and 8).

With such a configuration, the reinforcement member 310 that increases the rigidity of the cabin frame 20 can be disposed using the internal space of the roof 30.

Furthermore, the reinforcement member 310 couples the left and right beam portions (the left side beam 25L and the right side beam 25R) (see Fig. 4).

With such a configuration, rigidity of the cabin frame 20 can be effectively enhanced.

Furthermore, the reinforcement member 310 is disposed at a center of the upper frame (such as the front beam 23) in the front-rear direction (see Fig. 4).

With such a configuration, rigidity of the cabin frame 20 can be effectively enhanced.

Furthermore, the tractor 1 includes the first guide member 150 (duct) disposed in the internal space and constituting the flow path 151 through which air fed from the air conditioning unit 140 into the cabin 10 flows, and the reinforcement member 310 is fixed to the cabin frame 20 by using the stud 320 (a stopper) disposed so as to vertically penetrate the first guide member 150.

With such a configuration, the reinforcement member 310 disposed in the internal space can be suitably fixed to the cabin frame 20 while the first guide member 150, the stud 320, and the reinforcement member 310 are arranged vertically to suppress the expansion of the size of the roof 30 in the left-right direction.

Furthermore, a pair of the first guide members 150 is provided at intervals in the left-right direction (one direction of the horizontal direction), and both end portions of the reinforcement member 310 in the left-right direction are fixed to the plurality of beam portions (right side beam 25R and the like) using the studs 320 penetrating the pair of first guide members 150, respectively (see Figs. 9 and 11).

With such a configuration, both the end portions of the reinforcement member 310 can be fixed to the plurality of beam portions using the studs 320 penetrating the first guide members 150.

Furthermore, the first guide member 150 vertically penetrates the first guide member 150 so that the stud 320 can be inserted, and includes the hole forming portion 152 forming a hole partitioned from the flow path (see Figs. 11 and 12).

With such a configuration, it is possible to fix the reinforcement member 310 using the stud 320 while suppressing leakage of the outside air flowing through the first guide member 150.

Furthermore, the stud 320 fixes the reinforcement member 310, the upper frame (right side beam 25R and the like), and the roof 30 (inner roof 31) to each other (see Fig. 11).

With such a configuration, the roof 30 can be fixed to the cabin frame 20 using the stud 320.

Note that the tractor 1 according to the present embodiment is an embodiment of the working vehicle.

Furthermore, the front beam 23, the rear beam 24, the left side beam 25L, and the right side beam 25R according to the present embodiment are embodiments of the upper frame and the beam portions.

Furthermore, the reinforcement member 310 according to the present embodiment is an embodiment of the reinforcement portion.

Furthermore, the left side beam 25L and the right side beam 25R according to the present embodiment are an embodiment of the left and right beam portions.

Furthermore, the first guide member 150 according to the present embodiment is an embodiment of the duct.

Furthermore, the stud 320 according to the present embodiment is an embodiment of the stopper.

Furthermore, as described above, the tractor 1 (working vehicle) according to the present embodiment includes: the inner roof 31 constituting a ceiling in an interior of the cabin 10; the outer roof 32 that is provided on an upper side of the inner roof 31 and forms, together with the inner roof 31, an internal space capable of accommodating equipment inside; the first seal member 220 (seal member) that seals between the inner roof 31 and the outer roof 32; and the filter device 161 that can remove an object to be removed included in introduced outside air and is disposed outside a seal region surrounded by the first seal member 220 in the internal space.

With such a configuration, the maintenance of the filter device 161 can be suitably performed without impairing the sealing property.

Furthermore, the tractor 1 includes: the attachment member 162 (filter attachment portion) to which the filter device 161 can be attached, and to which the filter device 161 can be attached and detached by moving the filter device 161 in the front-rear direction (one direction); and the filter accommodation portion 121 that is formed in the internal space and accommodates the filter device 161 in a state of being attached to the attachment member 162, and the gap 121b (escape portion) allowing movement of the filter device 161 in the front-rear direction is formed in the filter accommodation portion 121 (see Figs. 9 and 14).

With this configuration, the filter device 161 can be attached and detached using the gap 121b.

Furthermore, the filter device 161 is formed in a columnar shape, and is attached to the attachment member 162 with an axis thereof oriented in the front-rear direction (see Fig. 8).

With such a configuration, the filter device 161 having a cylindrical shape can be suitably disposed with a moving direction of the filter device 161 at the time of attachment and detachment aligned with an axial direction of the filter device 161.

Furthermore, at least one of the inner roof 31 and the outer roof 32 (the outer roof 32 in the present embodiment) is formed with an opening 210a that opens to communicate with the internal space and through which the filter device 161 can pass (see Figs. 8 and 10).

With this configuration, the filter device 161 can be attached and detached using the opening 210a, and maintainability of the filter device 161 can be improved.

Furthermore, the opening 210a is formed in the outer roof 32.

With this configuration, the filter device 161 can be attached and detached from the upper side of the roof 30.

Furthermore, at least one of the inner roof 31 and the outer roof 32 (the outer roof 32 in the present embodiment) includes the cover portion 211 capable of opening and closing the opening 210a.

With such a configuration, the opening 210a can be closed by the cover portion 211.

Furthermore, the cover portion 211 is formed in a shape bulging upward or downward (upward in the present embodiment) according to the shape of the filter device 161 (see Fig. 10).

With such a configuration, the opening 210a can be closed using the cover portion 211 having a shape corresponding to the filter device 161. Furthermore, since the cover portion 211 bulges upward or downward instead of leftward and rightward, it is possible to reduce the overhang of the roof 30 in the left-right direction accompanying the installation of the filter device 161.

Furthermore, at least one of the inner roof 31 and the outer roof 32 (both the inner roof 31 and the outer roof 32 in the present embodiment) is formed in a shape bulging upward or downward according to the shape of the filter device 161 (see Fig. 10).

With this configuration, it is possible to reduce the overhang of the roof 30 in the left-right direction accompanying the installation of the filter device 161.

Note that the tractor 1 according to the present embodiment is an embodiment of the working vehicle.

Furthermore, the first seal member 220 according to the present embodiment is an embodiment of the seal member.

Furthermore, the attachment member 162 according to the present embodiment is an embodiment of the filter attachment portion.

Furthermore, the gap 121b according to the present embodiment is an embodiment of the escape portion.

Although the embodiment of the disclosure has been described above, the disclosure is not limited to the above configurations, and various modifications can be made within the scope of the invention described in the claims.

For example, in the above embodiment, the tractor 1 has been described as an example of the working vehicle, but other agricultural vehicles, construction vehicles, industrial vehicles, and the like may be used.

Furthermore, the configuration (shape, size, number, arrangement, and the like) of each member described in the above embodiment is not limited, and can be arbitrarily changed. For example, although the filter device 161 of the present embodiment is formed in a cylindrical shape (see Fig. 8), the shape of the filter device 161 is not limited to the present embodiment, and may be formed in a rectangular parallelepiped shape, for example.

Furthermore, although the filter device 111 is provided outside the roof 30 (see Fig. 5), the arrangement of the filter device 111 is not limited to the present embodiment. The filter device 111 may be disposed, for example, in the internal space of the roof 30 or the internal space of the left rear pillar 22L.

Furthermore, although the outside air is introduced into the roof 30 from the left and right rear pillars 22L and 22R, the portion to which the outside air is introduced is not limited to the left and right rear pillars 22L and 22R. For example, outside air may be introduced into the roof 30 from the left and right front pillars 21L and 21R.

Furthermore, although the attachment member 162 is provided between the filter device 161 and the blower 163 (see Fig. 13), the provision of the attachment member is not limited thereto, and the filter device 161 may be directly connected to the blower 163.

Furthermore, in the present embodiment, the filter device 161 protrudes upward from the roof 30 through the opening 210a formed in the outer roof 32 (see Fig. 10), but the arrangement of the filter device 161 is not limited to the present embodiment. For example, the filter device 161 may protrude downward from the roof 30 through an opening formed in the inner roof 31. Furthermore, the cover portion 211 may be configured to close the opening of the inner roof 31.

Furthermore, in the present embodiment, the filter device 161 is covered with the cover portion 211 separate from the main body portion 210, but the method of covering the filter device 161 is not limited to the present embodiment. For example, the filter device 161 may be covered with the main body portion 210 in which the cover portion 211 is integrally formed.

Furthermore, in the present embodiment, both the cover portion 211 of the outer roof 32, and the inner roof 31 are bulged along the shape of the filter device 161 (see Fig. 10), but the shapes of the cover portion 211 and the inner roof 31 are not limited to the present embodiment. For example, only one of the cover portion 211 and the inner roof 31 may bulge along the shape of the filter device 161. Furthermore, as long as the filter device 161 can be installed so as not to interfere with the roof 30, both the cover portion 211 and the inner roof 31 may not bulge along the shape of the filter device 161.

Furthermore, in the present embodiment, the opening 210a is opened and closed by attaching and detaching the cover portion 211 to and from the outer roof 32, but a method of opening and closing the opening 210a by the cover portion 211 is not particularly limited. For example, the opening 210a may be opened and closed by opening and closing the cover portion 211 supported by the outer roof 32 through a hinge.

Furthermore, although the reinforcement member 310 is disposed at the central portion in the left-right direction of the cabin frame 20 (see Fig. 4), the position of the reinforcement member 310 is not limited to the present embodiment. The reinforcement member 310 may be disposed at a front portion or a rear portion of the cabin frame 20, for example.

Furthermore, although the reinforcement member 310 is fixed to the left and right beams (the left side beam 25L and the right side beam 25R), the beam to which the reinforcement member 310 is fixed is not limited to the present embodiment. For example, the reinforcement member 310 may be fixed to the front and rear beams (the front beam 23 and the rear beam 24). Furthermore, the number of reinforcement members 310 is not limited to one, and may be plural. Furthermore, a plurality of the reinforcement members 310 may be fixed to beams different from each other. For example, one of the two reinforcement members 310 may be fixed to the front and rear beams, and the other of the two reinforcement members 310 may be fixed to the left and right beams.

## Claims

1. A working vehicle (1) comprising:
- a roof (30) constituting a ceiling portion of a cabin (10) and including an internal space capable of accommodating equipment inside; and
- a filter unit (160) disposed in the internal space so as to be located on a rear side of the roof (30) and including a first filter device (161) capable of removing an object to be removed included in introduced outside air.

2. The working vehicle (1) as claimed in claim 1, further comprising:
- a first blower (130) configured to introduce the outside air into the first filter device (161);
- a first duct (123) through which outside air having passed through the first filter device (161) flows; and
- an air conditioning unit (140) disposed in the internal space so as to be located on a front side of the roof (30) and configured to feed the outside air having flown through the first duct (123) into the cabin (10),
wherein the first blower (130) and the first duct (123) are disposed in the internal space between the air conditioning unit (140) and the filter unit (160) in a front-rear direction.

3. The working vehicle (1) as claimed in claim 2, further comprising a second duct (150) through which the outside air fed from the air conditioning unit (140) into the cabin (10) flows,
wherein the second duct (150) is disposed so as to extend rearward from the air conditioning unit (140) along a side portion of the roof (30).

4. The working vehicle (1) as claimed in any one of claims 1 to 3, further comprising a second filter device (111) capable of removing an object to be removed included in the introduced outside air and different from the first filter device (161),
wherein
- the filter unit (160) includes a switching portion (164,167) capable of switching between a first state in which the outside air is introduced into the first filter device (161) and a second state in which the outside air is introduced into the second filter device (111), and
- the first filter device (161), the second filter device (111), and the switching portion (164,167) are disposed in parallel along a left-right direction in plan view on a rear side of the roof (30).

5. The working vehicle (1) as claimed in claim 4, wherein
- the cabin (10) includes left and right pillars (22R,22L) configured to support the rear side of the roof (30),
- a first pillar (22R) of one of the left and right pillars (22R,22L) is provided with a first intake port (22Ra) that takes in the outside air introduced into the first filter device (161), and
- a second pillar (22L) of another of the left and right pillars (22R,22L) is provided with a second intake port (22La) that takes in the outside air introduced into the second filter device (111).

6. The working vehicle (1) as claimed in claim 5, wherein at least one of the first filter device (161) and the second filter device (111) is disposed above the pillar (22R,22L) so as to overlap the pillar (22R,22L) in plan view.

7. The working vehicle (1) as claimed in any one of the preceding claims, insofar as referring to claim 2, wherein the filter unit (160) includes a second blower (163) disposed adjacent to the first filter device (161) and configured to introduce the outside air into the first filter device (161).

8. The working vehicle (1) as claimed in any one of claims 1 to 7, wherein the filter unit (160) includes a flow meter (165) capable of measuring a flow rate of outside air that has passed through the first filter device (161).
